Europäisches Patentamt

European Patent Office

Office européen des brevets

(11) Publication number: **0 509 511 A2**

## EUROPEAN PATENT APPLICATION

(21) Application number: **92106634.6**

(22) Date of filing: **16.04.92**

(51) Int. Cl.5: **G01C 19/72**

(30) Priority: **18.04.91 JP 112186/91**

(43) Date of publication of application:
**21.10.92 Bulletin 92/43**

(84) Designated Contracting States:
**DE GB**

(71) Applicant: **HITACHI, LTD.**
**6, Kanda Surugadai 4-chome**
**Chiyoda-ku, Tokyo 101(JP)**
Applicant: **HITACHI CABLE, LTD.**
**1-2, Marunouchi 2-chome**
**Chiyoda-ku Tokyo 100(JP)**

(72) Inventor: **Sonobe, Hisao**
**14-1-501, Aobacho**
**Katsuta-shi(JP)**
Inventor: **Oho, Shigeru**
**74-7, Takaba**
**Katsuta-shi(JP)**
Inventor: **Makino, Junichi**
**3337-245, Nakane**
**Katsuta-shi(JP)**
Inventor: **Gunji, Yasuhiro**
**19-1-204, Ishinazakacho-1-chome**
**Hitachi-shi(JP)**
Inventor: **Kajioka, Hiroshi**
**Higashiyama Terasu C-4, 605, Nakanuki**
**Tsuchiura-shi(JP)**
Inventor: **Kumagai, Tatsuya**
**15-18-104, Hidakacho-3-chome**
**Hitachi-shi(JP)**

(74) Representative: **Patentanwälte Beetz - Timpe -**
**Siegfried - Schmitt-Fumian- Mayr**
**Steinsdorfstrasse 10**
**W-8000 München 22(DE)**

(54) Optical fiber gyro of phase modulation type.

(57) An optical fiber gyro of phase modulation type comprises an optical path of an optical fiber including an optical fiber loop (4) movable for rotation in correspondence to rotation of a movable object to be measured for detecting a rotational angular velocity of said movable object on the basis of a phase change of a coherent light beam of predetermined wavelength, which is propagated through the optical path of an optical fiber, the phase change being generated in correspondence to the rotation of the optical fiber loop (4), wherein a measure is provided for preventing an influence of a reflected light beam of the coherent light beam generated in said optical path on the detection value.

FIG. 1

BACKGROUND OF THE INVENTION

Field of The Invention

The present invention relates to an optical fiber gyro of phase modulation type, and more particularly to a small-sized optical fiber gyro of phase modulation type employing an optical fiber loop and suitable to be mounted to a movable object such as a vehicle for detecting an angular velocity and an orientation of the movable object.

Description of The Related Art

As a sensor for detecting an angular velocity, there is heretofore known a gyroscope. However, recently, a solid-state optical gyro employing an optical fiber loop, as disclosed in U.S. Patent No. 4,796,993 for example, is put into practical use.

This prior art optical fiber gyro of phase modulation type is designed in such a way that an input light beam emitted from a coherent light source such as a laser is split into two light beams, the two light beams thus obtained are propagated through a branch optical path including a phase modulator and an optical fiber loop in opposite directions, and the two light beams which have passed through the branch optical path are combined to produce one composite light beam. The phase modulator is obtained by winding an optical fiber having a total length of several meters, which is a part of the branch optical path, around a cylindrical electrostrictive element, and used to modulate the phase of the light beam passing through the branch optical path by the change of the length of the optical fiber due to the change in size of the electrostrictive element by an electric signal. When the optical fiber loop moves for rotation together with the rotation of the movable object on which the optical fiber loop is mounted, the rotational angular velocity of the movable object is detected by utilizing the fact that the modulated phase of the composite light beam changes as a function of the rotational angular velocity of the optical fiber loop.

In such an optical fiber gyro of phase modulation type, the light beam is applied to an input end of the optical fiber forming the whole optical path including the branching optical path, the composite light beam outputted from an output end thereof is converted into an electric signal by a photoelectronic element, and the resultant electric signal is processed to produce a signal representing the rotational angular velocity of the movable object, or the signal thus produced is further processed, whereby the orientation of the movable object is detected. The optical fiber forming the whole optical path has at least two ends including the input and output ends. A part of the composite light beam is reflected from the output end, and the reflected light beam returns through the optical fiber to the input end where the reflected light beam is again inputted into the optical fiber together with the input light beam. Therefore, the output composite light beam is influenced by the reflected light beam so that an error is introduced in the detection value of the optical fiber gyro. Further, if an optical branch is used to split the input light beam into the two light beams, since the fiber of the optical branch has its remote end, the reflected light beams from the remote end causes a similar error in the detection value.

SUMMARY OF THE INVENTION

It is therefore an object of the present invention to provide an optical fiber gyro of phase modulation type comprising an optical fiber path including an optical fiber loop, which is mounted to a movable object to be measured and moves for rotation together with rotation of the movable object, for detecting a rotational angular velocity of the movable object based on change in phase of a coherent light beam, which is propagated through the optical fiber path, generated correspondingly to the rotation of the optical fiber loop, wherein influence of a reflected light beam of the coherent light beam generated in the optical fiber path on the detection value is prevented.

According to the present invention, an optical fiber gyro of phase modulation type for detecting a quantity relating to a rotational angular velocity of a movable object comprises: a coherent light source; an optical fiber path including an input portion having an input end to which a coherent light beam emitted from the light source is applied, an optical branch optically connected to the input portion for receiving the input coherent light beam and splitting the input coherent light beam into two branched coherent light beams, a sensing portion having a branch optical path including a phase modulator and an optical fiber loop, which moves for rotation together with rotation of the movable object and connected to propagate the two branched coherent light beams therethrough in directions opposite to each other and again combine the two branched coherent light beams to produce one composite coherent light beam and an output portion optically connected to the sensing portion and having an output end for outputting the composite coherent light beam; processing means for processing the composite coherent beam outputted from the output end to produce a detection signal relating to the rotational angular velocity of the movable object; and means for preventing influence of a reflected light beam generated in the optical fiber path on the detection signal.

According to one embodiment of the invention, the means for preventing an influence of a reflected light beam on a detection signal is antireflection means provided at least at an end face of the output end of the output portion for preventing reflection of the light beam.

According to another embodiment of the invention, the means for preventing an influence of a reflected light beam includes means for turning on and off the input coherent light beam alternately at a frequency determined in accordance with a length of the optical fiber loop, and means for interrupting the composite coherent light beam outputted from the output end in synchronism with the turning on and off of the input coherent light beam.

BRIEF DESCRIPTION OF THE DRAWINGS

Fig. 1 is a view showing the arrangement of one embodiment of the present invention employing antireflection means;

Figs. 2, 3 and 4 show modifications of the antireflection means;

Fig. 5 is a view showing the arrangement of another embodiment of the present invention employing means for preventing influence of the reflected light beam;

Fig. 6 is a time chart useful in explaining the operation of the means for preventing influence of the reflected light beam in the embodiment of Fig. 5;

Fig. 7 is a view showing the arrangement of a modification of the embodiment of Fig. 5;

Figs. 8 and 9 show other arrangements of an optical fiber gyro to which the present invention is applied;

Fig. 10 is a graphical representation showing the relationship between the ratio of an angle of slant of an end face of an optical fiber to a half value of the maximum incident angle and the reflectance;

Fig. 11 is an enlarged view, partially cross section, showing a state of the reflected light beam at the end face of the optical fiber in the prior art optical fiber gyro;

Fig. 12 is an electrical circuit diagram equivalently showing a propagation of the light beam in the optical fiber gyro;

Fig. 13 is a graphical representation showing the results of simulation of the reflected light beam using the equivalent electrical circuit; and

Fig. 14 is a graphical representation showing the relationship between the ratio of a fourth order frequency component to a second order frequency component and the input angular velocity obtained by the simulation using the circuit of Fig. 12.

DESCRIPTION OF THE PREFERRED EMBODIMENTS

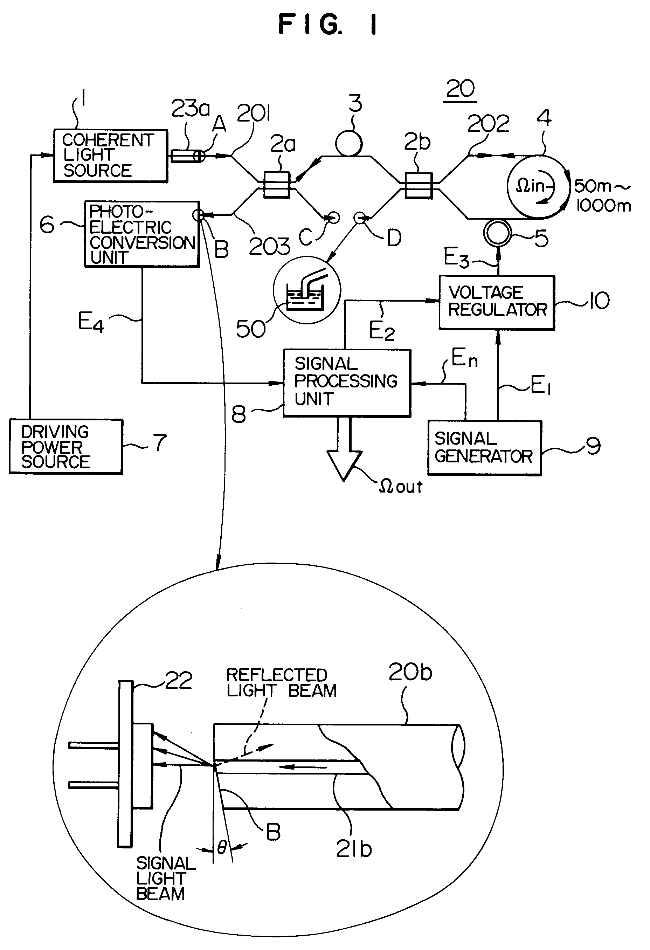

A preferred embodiment of the present invention will hereinafter be described with reference to Fig. 1. An optical fiber gyro of Fig. 1 includes an optical system and the other portions. The optical system includes a coherent light source 1, such as a laser, for emitting a coherent light beam, a rod lens 23a, and an optical fiber path 20. The optical fiber path 20 is provided with an input portion 201 including an optical fiber path having an input end A for receiving a light beam emitted from the light source 1, a sensing portion 202 formed by an optical fiber including a light beam branch element 2a, a polarizer 3, a light beam branch element 2b, an optical fiber loop 4 and a phase modulator 5, and an output portion 203 including an optical fiber having an output end B.

The coherent light source 1 is, for example, a usual laser diode or a superluminescent type diode. Each of the light beam branch elements 2a and 2b is a beam splitter using optical fibers arranged in the evanescent coupling. Moreover, the polarizer 3 is obtained by winding a specific optical fiber having the polarization characteristics into a coil. The optical fiber loop 4 is obtained by winding an optical fiber having a total length of several hundreds meters into a coil. The optical fiber loop 4 is mounted in such a way as to move for rotation together with the rotation of the movable object to be measured. For example, in the case where the movable object is a vehicle, if the optical fiber gyro is fixed to the vehicle, and the vehicle runs for movement including a rotational component by changing its traveling direction, the optical fiber loop 4 is also naturally subjected to movement having a rotational component corresponding to the rotational component of the vehicle.

The phase modulator 5 is formed by winding an optical fiber having a total length of several meters round an electrostrictive element. Then, the phase modulator 5 operates as an AC optical phase bias means

4

in such a way as to introduce a phase change in the light beam by changing the size of the electrostrictive element according to electric signal applied thereto thereby changing the length of the optical fiber. Incidentally, the optical fiber employs a single-mode optical fiber which maintains the plane of polarization, for example. Moreover, the above components are connected to one another by fusing the respective optical fibers. Further, the rod lens 23a is provided in order to collimate the light beam emitted from the coherent light source 1 to be projected to the optical fiber.

A signal generator 9 generally includes a quartz oscillator, a frequency divider, a phase shifter, a low-pass filter, and a notch filter for preventing transmission of a light beam of specific frequency band therethrough to serve as a multifrequency oscillator for generating a sine wave E1 of a predetermined frequency used for driving the phase modulator 5 and synchronizing signal, several pulse signals En having frequencies of integral multiples of the fundamental fm. A voltage regulator 10 is, for example, a multiplier employing a D/A converter and operates to change its amplification gain according to a command signal E2 and regulate finely a driving voltage E3 used for the phase modulator 5 to an optimal value.

A driving power source 7 is constructed, for example, by a constant current unit for supplying a driving current to the coherent light source 1.

A photoelectric conversion unit 6 is mainly made up of a photo diode and a current to voltage conversion unit for converting a light beam outputted from the output end B of the output portion 203 into a voltage signal.

A signal processing unit 8 includes a synchronous detector which operates in synchronism with the pulse signal En, an A/D converter, a microcomputer, and an I/O interface therefor for supplying the command signal E2 to the voltage regulator 10 and processing an AC output signal E4 from the photoelectric conversion unit 6 thereby to output a rotational angular velocity of the optical fiber loop, i.e., a detection value $\Omega_{out}$ of an input angular velocity $\Omega_{in}$. Incidentally, the detection value $\Omega_{out}$ may be outputted in any form of parallel or serial digital signal and analog signal suitable to be inputted into an apparatus connected thereto.

The above construction is the basic construction of the optical fiber gyro of phase modulation type and is the same as that of the prior art gyro as disclosed in U.S. Patent No. 4,796,993 corresponding to JP-A-63-314410. When the frequency fm and amplitude of the driving voltage E3 are set to respective values determined by taking the characteristics of the phase modulator 5 and the total length of the optical fiber of the optical fiber loop 4 into consideration, the AC output E4 of the photoelectric conversion unit 6 includes the following frequency components;

$$A1 = Kp \sin (Ks\ \Omega_{in}) \times J1(Km)$$
$$\times \cos \omega\ (t - \tau/2) \qquad (1)$$

$$A2 = Kp \cos (Ks\ \Omega_{in}) \times J2(Km)$$
$$\times \cos 2\omega\ (t - \tau/2) \qquad (2)$$

$$A3 = -Kp \sin (Ks\ \Omega_{in}) \times J3(Km)$$
$$\times \cos 3\omega\ (t - \tau/2) \qquad (3)$$

$$A4 = -Kp \cos (Ks\ \Omega_{in}) \times J4(Km)$$
$$\times \cos 4\omega\ (t - \tau/2) \qquad (4)$$

$$A5 = Kp \sin (Ks\ \Omega_{in}) \times J5(Km)$$
$$\times \cos 5\omega\ (t - \tau/2) \qquad (5)$$

$$A6 = Kp \cos (Ks\ \Omega_{in}) \times J6(Km)$$
$$\times \cos 6\omega\ (t - \tau/2) \qquad (6)$$

where A1 to A6 are amplitudes of the individual frequency components, Kp is a constant value determined by the magnitude of the signal light beam and the photoelectric conversion efficiency, Ks is a constant value relating to the Sagnac effect, i.e., the sensitivity of the optical system, $\Omega_{in}$ is an input angular velocity, Km is a constant value relating to the phase modulation factor, J1(Km) to J6(Km) are the first to sixth order Bessel functions of the amplitude of E3, the frequency Em and the length of the optical fiber loop 4, $\omega$ is an angular velocity of the frequency fm of the driving voltage E3, t is a time, and $\tau$ is a period of time required for the light beam to transmit through the optical fiber loop 4.

Further, explanation will be made of the expressions (1) to (6), The expression (1) represents the first order frequency component of the frequency fm of the driving voltage E3 and the expression (2) represents the second order frequency component of the frequency fm of the driving voltage E3. Similarly, the expression (3) represents the third order frequency component, the expression (4) represents the fourth order frequency component, and the expression (6) represents the sixth order frequency component. Incidentally, the output includes unlimited number of higher order frequency components, which are omitted.

The input angular velocity $\Omega_{in}$ is obtained by the following expression which is a modification of the ratio of the expression (1) to the expression (2).

$$\Omega_{in} = arc\ Tan\ [A1/A2 \cdot J2(Km)/J1(Km)] \cdot 1/Ks \qquad (7)$$

On the other hand, a value relating to the phase modulation factor of the phase modulator 5 can be expressed by the following equation representing the ratio of the expression (4) to the expression (2).

$$J4(Km)/J2(Km) = A4/A2 \qquad (8)$$

In other words, the command signal E2 given to the voltage regulator 10 so as to make constant a value of A4/A2, as expressed by the equation (8), obtained in the signal processing unit 8 by adjusting finely the amplitude of the driving voltage E3. As a result, J4(Km)/J2(Km) becomes constant (i.e., the phase modulation factor becomes constant) and J2(Km)/J1(Km) of the expression (7) also becomes constant so that the valve of $\Omega_{in}$ is not influenced at all by the level variation of the signal light beam and the amplitude variation of the phase modulator 5. Accordingly, it is possible to detect the input angular velocity $\Omega_{in}$ with high accuracy.

The above expressions are established only when the optical system and the other electric system are ideal. However, actually, there exists a difference between the values obtained from the expressions and the actual values due to the influence of the light beam reflection in the optical system. Then, the description will be given to the influence of the reflected light beam in the case of no provision of antireflection means according to the present invention which will be described later.

In the case of the construction shown in Fig. 1, the propagation paths of the light beam applied to the end face A are as follows.

$$A \rightarrow 2a \rightarrow 3 \rightarrow 2b \rightarrow 4 \rightarrow 5 \rightarrow 2b \rightarrow 3 \rightarrow 2a \rightarrow B$$
$$\searrow \qquad \searrow \qquad \nearrow \qquad \searrow \qquad \searrow$$
$$G \qquad\quad 5 \rightarrow 4 \qquad\quad D \qquad\quad A$$

On the other hand, since the reflection of the light beam occurs in a position where the refractive index is abruptly changed, the reflection of the light beam occurs most readily in the end portions A, B, C and D of the fibers. Thus, the propagation paths of the light beams reflected at the end portions A, B, C and D are as follows.

A    ... The reflected light beam transmits through the same path as that of the above incident light beam to B

B    ... The reflected light beam transmits through 2a and thereafter through the same path as that of the incident light beam to B

$$C \rightarrow 2a \rightarrow B$$
$$\searrow$$
$$A$$

D    ... The reflected light beam transmits through 2a and thereafter through the same path as that of the incident light beam to B

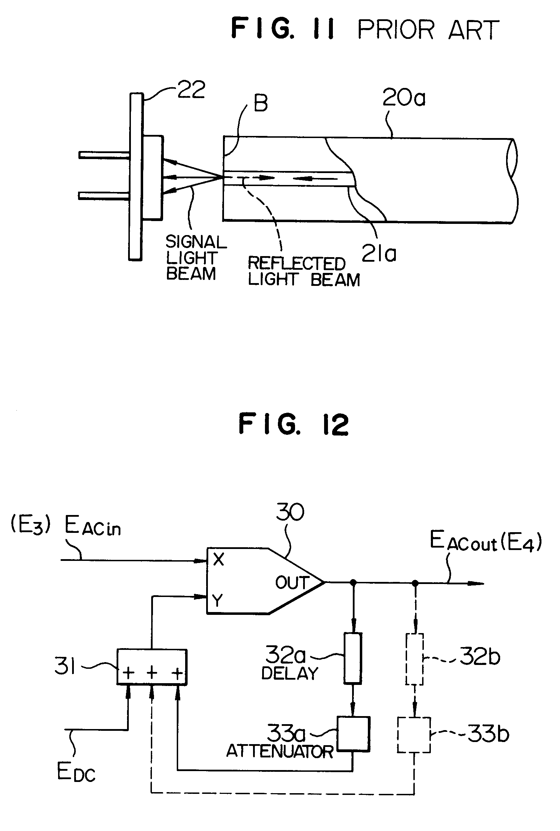

Fig. 11 is an enlarged view, partially cross-sectioned, of the portion B of the prior art system. As apparent from this figure, a core 21a of an optical fiber 20a is a portion through which the light beam propagates, the end face B thereof is polished approximately perpendicular to the propagation axis of the light beam, and a photo diode 22 is disposed right in front of an optical fiber with a small gap therebetween.

In the case of such a construction, with the signal light beam indicated by an arrow of a solid line (as returned after modulated by the phase modulator 5), it is expected that when the light beam is emitted from the core 21a into the air, theoretically, 4 % in quantity of the light beam is reflected at the end face B and then goes back as reflected light beam, through the core 21a as indicated by an arrow of a broken line. According to the actual measuring, an existence of the reflected light beam at about 2 to 3 % was confirmed.

On the other hand, the quantity of signal light beam emitted from the core 21a to the air is theoretically 96 % of the quantity of the signal light beam propagated through the core 21a, and several percentages of the signal light beam is reflected from each of the two sides of the cover glass of the photo diode 22 so that the remaining signal light beam is applied to the detection unit. The quantity of the signal light beam which is reflected from the cover glass of the photo diode 22 and the like and again projected to the core 21a is almost zero, when the gap between the photo diode 22 and the end face B of the optical fiber is 100 $\mu$m or so.

As described above, the reflection of light beam, which goes back to the core 21a, occurs at the portion A in the same manner. Moreover, at the portion D, the quantity of the signal light beam is 2 times as large as that at the portion B, and therefore, the quantity of the reflected light beam is also 2 times as large as that at the portion B. On the other hand, since the signal light beam does not go back directly to the portion C, the first order reflection does not occur there. It is considered that the light beams as reflected at the portions A and B, respectively, are again reflected at the portion C and returns to the portions A and B, respectively. However, the quantity of the reflected light beam, which returns to the optical fiber loop 4, is very small.

Now, when the total quantity of the reflected light beam as inputted to the light beam branch element 2b will be examined. It is assumed that first, the quantity of the light beam projected into the end face A of the optical fiber is 1, the loss of light beam at each connection portion of the optical fiber and the propagation loss are both zero, and the reflectance thereof is 0.04 (4 %). Then, the following relationships are established.

The quantity of the light beam applied to the light beam branch element 2b is;

$$1 \times 1/2 = 0.5.$$

The quantity of the signal light beam going back to the end face D is;

$$0.5 \times 1/2 = 0.25.$$

The quantity of the light beam reflected at the end face D is;

$$0.25 \times 0.04 = 0.01.$$

The quantity of the signal light beam going back to each of the end faces A and B is;

$$1 \times 1/2 \times 1/2 \times 1/2 = 0.125.$$

The quantity of the light beams reflected at each of the end faces A and B is;

$$0.125 \times 0.04 = 0.005.$$

The quantity of the reflected light beam applied to the light beam branch element 2b is;

$$0.005 \times 2 \times 1/2 = 0.005.$$

As a result, the ratio of the quantity of the reflected light beam to the quantity of the original light beam, both applied to the branch element 2b, is;

$$(0.01 + 0.005)/0.5 = 0.03$$

and thus reaches 3 %.

Next, the description will be given to the causes of the influence of the reflected light beam upon the signal light beam.

First, giving the qualitative description, if the light beam applied to the optical fiber loop 4 is a pure DC one, there is no problem at all. However, when an AC signal is superimposed on the light beam of interest, the AC signal is superimposed on the term of Kp of each of the above-mentioned expressions (1) to (6). Then, since the AC signal is a distorted AC voltage containing many frequency components, a large number of beat frequency are generated so that the amplitudes A1 to A6 take unexpected values.

If the relationship between the reflected light beam and the signal light beam is modeled in the form of an electric circuit, the arrangement as shown in Fig. 12 is obtained. Incidentally, in this figure, the reference numeral 30 designates a multiplier, the reference numeral 31 designates an adder, the reference numerals 32a and 32b designate delay circuits, the reference numerals 33a and 33b designate attenuators, the reference symbol $E_{DC}$ designates a DC signal, and the reference symbols $E_{AC}$ in and $E_{AC}$ out designate AC signals. The portion including the delay circuit 32a and the attenuator 33a indicated by solid lines corresponds to the first order reflection, and the portion including the delay circuit 32b and the attenuator 33b indicated by broken lines corresponds to the second order reflection. However, since the other portions are difficult to correspond to any suitable optical phenomenon, the description thereof will be omitted here.

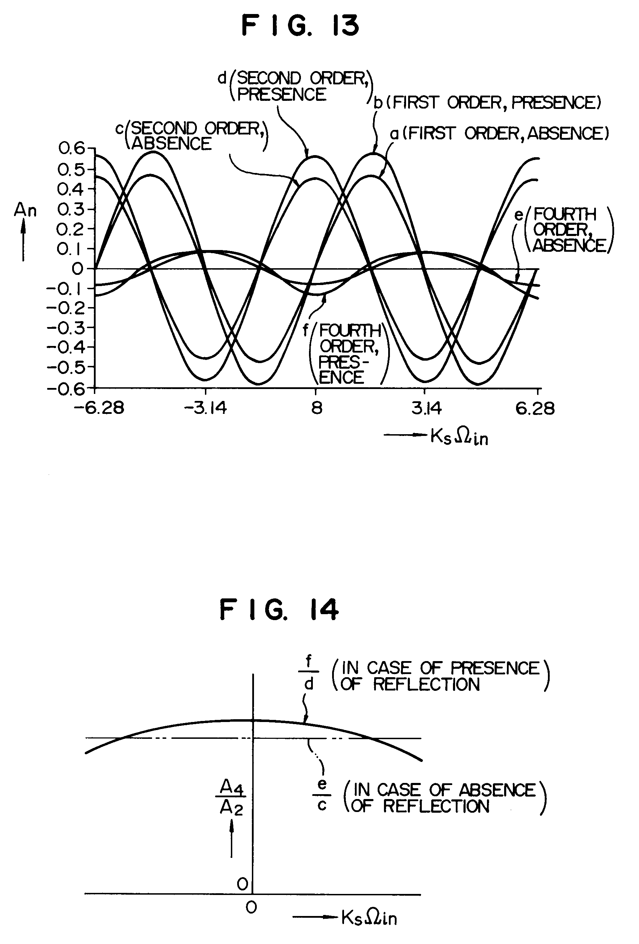

Now, the results of the simulation of the circuit of Fig. 12 by the computer in the presence and absence of the reflected light beam are as shown in Fig. 13. Incidentally, in this figure, the axis of abscissa represents the value which is obtained by multiplying the input angular velocity $\Omega_{in}$ by the constant value Ks in a unit of radian relating to the sensitivity of the optical system. The axis of ordinate represents the amplitude in a unit of volt, for example, of each of the frequency components. Moreover, the conditions of the waveforms (a) to (f) are as follows.

    (a):      the first order component with no reflection component.
    (b):      the first order component including the reflection component.
    (c):      the second order component with no reflection component.
    (d):      the second order component with the reflection component.
    (e):      the fourth order component with no reflection component.
    (f):      the fourth order component with the reflection component.

Incidentally, as for the conditions of the reflection, it is assumed that the reflectance is 10 %, the delay time is 0, and only the first order reflection is present. The figure indicates clearly a difference in the amplitude characteristics between the case including the reflected light beam and the case including no reflected light beam. Those characteristics meet with various experimental results in the past.

Next, Fig. 14 is a graphical representation showing the relationship between the ratio of the fourth order frequency component to the second order frequency component in the amplitude characteristics shown in Fig. 13 and the input angular velocity $\Omega_{in}$. In the figure, as described above, the abscissa represents the phase difference of the light beam, and the ordinate represents the ratio of the amplitude A4 to the amplitude A2. The two-dot chain line represents the characteristics in the case including no reflection component, and the solid line represents the characteristics in the case including the reflection component. As seen from this figure, it will be readily understood that in the case including no reflection component, the amplitude ratio is always constant irrespective of the magnitude of the input angular velocity $\Omega_{in}$, but in the case including the reflection component, the amplitude ratio becomes smaller as the input angular velocity $\Omega_{in}$ is increased. Thus, this characteristic also meets with the past experimental result.

As described above, the amplitude characteristics in the case including the reflection component deviate from the ideal amplitude characteristics in the case including no reflection component. However, if the quantity of deviation is stable, the input angular velocity $\Omega$ in can be detected with accuracy by correcting the characteristics in the signal processing unit 8. Thus, there is no significant problem. But, according to the past experiments, since the quantity of deviation is greatly changed due to the change of the reflection conditions at the end face of the optical fiber and the change of the branching ratios of the light beam branch elements 2a and 2b, it is difficult to correct the characteristics in the signal processing unit 8.

In order to prevent the influence of the reflected light beam as described above, in the embodiment of Fig. 1, antireflection means is provided on each of the end faces B and C. For the provision of the antireflection means, as shown in the figure, the end face B of the core 21b of the optical fiber 20b is slanted at an angle of $\theta$ and polished.

Thus, by polishing the slanted end face B, it is possible to incline the optical axis of the reflected light beam at about $2\theta$ relative to the optical axis of the core 21b, when the signal light beam is reflected from the end face. Therefore, when this angle $\theta$ is set to a value equal to or more than a valve near to the maximum incidence half angle value of the optical fiber 20b, it is possible to surely prevent the phenomenon in which the reflected light beam is re-introduced into to the core 21b to reversely transmitted therethrough.

Now, assuming that the maximum incidence half angle value is $\theta$f, this value is obtained by the following expressions

$$\theta f = arc\ Sin\ n1 \cdot (2\Delta\ to\ half\ power)\qquad(9)$$

$$\Delta = (n1 - n2)/n1\qquad(10)$$

where n1 is a refractive index of the core 21b, and n2 is a refractive index of the clad or the periphery of the core 21b.

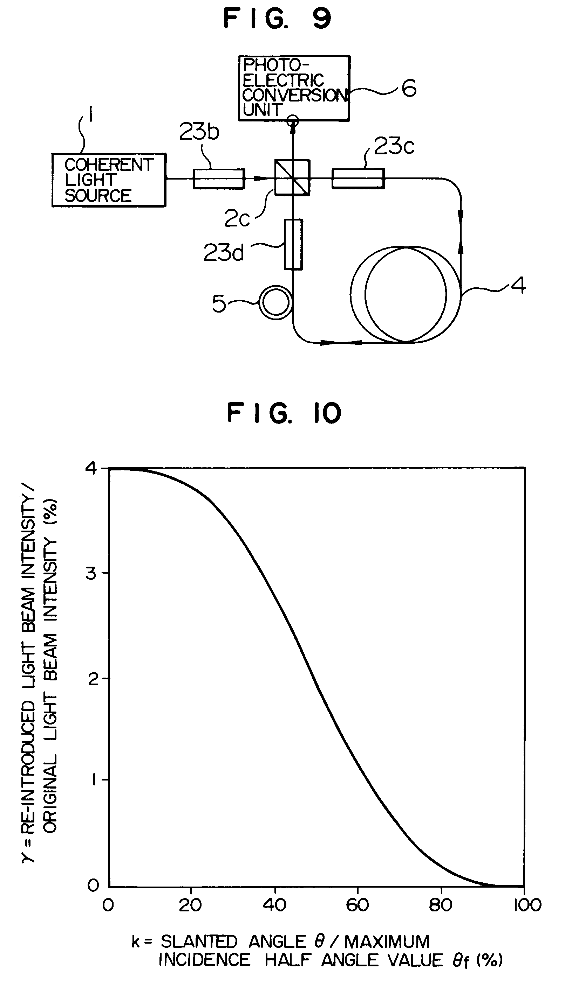

Therefore, assuming that n1 = 1.45, and (n1 - n2) = 0.005, $\theta$f is about 8°. Then, in this case, the slanted angle $\theta$ of the polished face is equal to, or more than, a value near to 8°. Fig. 10 is a graphical representation showing the relationship between the ratio k of the slanted angle $\theta$ to the maximum incidence half angle $\theta$f and the ratio $\gamma$ of the re-introduced light beam intensity to the original light beam intensity. When k = 60 %, $\gamma$ is one fourth of the value in the case of the slanted angle being 0°. Thus, the substantial effect of preventing the reflection can be obtained.

Incidentally, when the angle $\theta$ is larger than the maximum incidence half angle value $\theta$f, the angle of emission of the signal light beam may deviate from the optical axis of the core 21b. Only deviation of the light beam is not a serious problem. However, if the angle is too large, there is a possibility that the total reflection occurs in the core 21b and the signal light beam is not emitted from the core 21b at all. Therefore, the upper limit of the angle $\theta$ is a value slightly smaller than an angle of about 42° with which the total reflection occurs.

On the other hand, the signal light beam is, as shown in the figure, emitted from the core 21b in the direction oblique with respect to the optical axis of the core 21b (i.e., at about half of the angle $\theta$ with the optical axis), and then is obliquely applied to the photo diode 22. Therefore, at this time, the reflection occurs. However, as described with reference to Fig. 11, if the gap between the photo diode 22 and the end face B of the core 21b has a substantial distance, the signal light beam as reflected from the surface of the photo diode 22 is not re-introduced into the core 21b.

Moreover, the end face D is, as shown in the figure, immersed in a liquid 50 such as the well-known matching oil having almost the same refractive index as that of the optical fiber. For example, when the refractive index of the optical fiber is 1.5, a silicon oil having a refractive index of 1.5 is used for the anti reflecting liquid.

In the embodiment of Fig. 1, the antireflection means is provided only on the end faces B and D. However, if the end face A is provided with the same antireflection means as that of the end face B and the end face C is provided with the same antireflection means as that of the end face D, the effect of preventing the influence of the reflected light beam becomes more remarkable. In this connection, as described above, since the light beam reflected at the end face B gives the most serious influence, it is possible to sufficiently reduce the influence of the reflected light beam by providing the antireflection means only on the end face B.

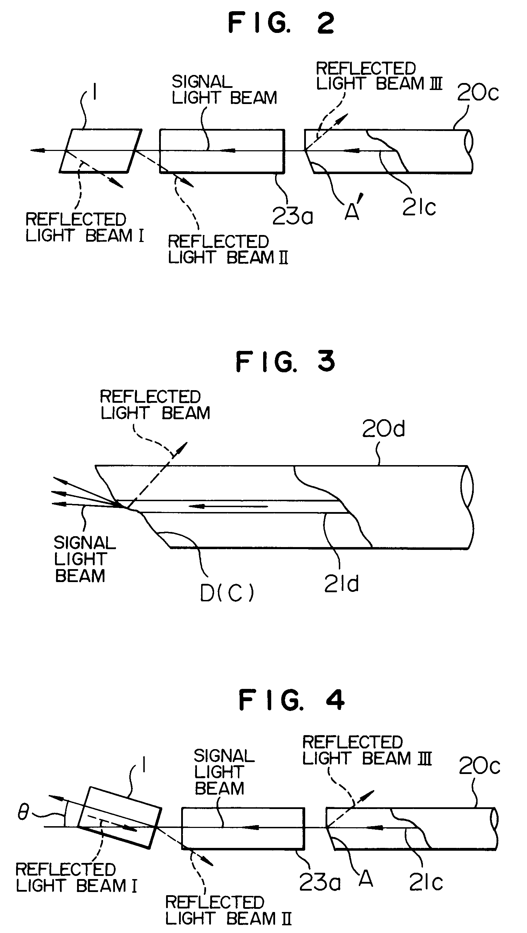

Another embodiment of the antireflection means, which is applied to the end face A, is shown in Fig. 2. In Fig. 2, an optical fiber 20c is the same as the optical fiber 20b of Fig. 1. The rod lens 23a has a length slightly shorter than a 1/2 pitch of the lens and serves to collect the diverged light beams emitted from the coherent light source and apply them to a core 21c. The coherent light source 1 is of a type which does not require a Fabry-Pérot resonator, and may be, for example, a superluminescent type diode having end faces slanted and polished.

In the embodiment of Fig. 2, the three portions each having the possibility that the reflected light beam is re-applied to the core 21c are tapered and polished. As a result, since the reflected light beams I to III are reflected at respective angles with the optical axis of the core 21c as shown by respective arrows of broken lines, it is possible to prevent the phenomenon in which the reflected light beam is reapplied to the core 21c and reversely transmitted therethrough.

Then, it may be considered that when the end face is slanted and polished in such a manner, the efficiency of the coupling between the coherent light source 1 and the core 21c is reduced. However, since the coherent light source 1 has a large divergence angle of light beam, this provides substantially no problem.

Next, Fig. 3 shows another embodiment of the antireflection means provided to the end faces C and D. Since the light beams emitted from these end faces are not utilized as the signal light beam (the signal light beam is not emitted from the portion C), the polishing is not required therefor, and it is enough as shown in

9

the figure, to make the end face D (C) of the optical fiber 20d, especially the end face of the core 21d an angle as large as possible with the optical axis of the core 21d. By arranging in this manner since the reflected light beam is reflected, as shown by an arrow of a broken line, at a large angle with the optical axis of the core 21d, it is possible to prevent the phenomenon in which the reflected light beam transmits reversely through the core 21d.

Incidentally, the slant of the end face without polishing is very readily obtained. For example, if the optical fiber is cut by a tool such as a nipper, the desired state can be obtained with a probability of about 90 % or more. Then, whether or not the optical fiber is cut with a suitably slanted end is readily checked by observing the shape of the end face by a microscope or the like, or by observing the direction of emission of the signal light beam. If not, the optical fiber may again be cut.

Now, as described above, since the portion C emits no signal light, it does not necessarily require to provide the antireflection means. Therefore, there is no need for observing the state of cut-off after the optical fiber is cut off by the nipper or the like.

Thus, in the case where the antireflection means is provided to the emission ends (the portions A, B and D) of the signal light beam in the optical system and the coherent light source 1, it is possible to surely prevent the phenomenon in which after the signal light beam is transmitted reversely through to the optical fiber loop 4 and subjected to the phase modulation again by the phase modulator 5, it returns to the portion B as an undesired signal light beam, and finally causes the error in the detection value $\Omega_{out}$ of the input angular velocity $\Omega_{in}$. Therefore the present embodiment has advantageous effects to improve the detection accuracy of the optical fiber gyro of phase modulation type up to about 10 times as large as that of the prior art system only by adding the simple antireflection means to the prior art system.

Incidentally, the antireflection means is not limited to the above-mentioned embodiments. That is, the satisfactory effects can be obtained by slanting and polishing or cutting at an angle all of the end faces, for example, or by slanting and polishing some of the end faces and cutting at an angle the other end faces.

Next, Fig. 4 shows a modification of the antireflection means of Fig. 2. The modification is different from the embodiment of Fig. 2 in that the optical axis of the coherent light source 1 is inclined at an angle $\theta$ larger than the maximum incidence half angle value of about 8° of the optical fiber constituting the coherent light source with the optical axis of the core 21c.

By arranging in this manner, the reflected light beams II and III are substantially the same as those of the embodiment of Fig. 2, so that none of them is re-introduced into the core 21c.

In the present embodiment, since the reflected light beam I returns the optical path through which it has been propagated, the light beam I is re-applied to the core 21c and transmitted therethrough, so that this phenomenon is not readily removed. However, in most of the coherent light sources 1 using the superluminescent type diode, the end face at which the reflected light beam is generated is a non-exciting side, or the end face is covered with a nonreflective coating. In such a case, since the reflected light beam I is less than or equal to about 1 % of the signal light beam, and it diverges largely when emitted from the coherent light source 1, even if the reflected light beams are collected by the rod lens 23a, the efficiency in which the collected light beams are applied to the core 21c is not larger than 10 %.

Therefore, the reflected light beam reversely transmitted through the core 21c is not larger than about 0.1 % of the signal light beam applied to the coherent light source 1. Thus, this involves no serious problem. Therefore, the embodiment of Fig. 4 provides substantially the same effect as that of the embodiment of Fig. 2. Incidentally, when the above value is intended to be further decreased, the efficiency of the coupling between the coherent light source 1 and the core 21c may be reduced intentionally.

Then, as an embodiment of the present invention, instead of the embodiments shown in Fig. 1, Fig. 2 and Fig. 3 in which the end faces are slanted and polished or cut at an angle, the end face may also be covered with the so-called nonreflective coating which is obtained by applying an antireflection material such as Mg powder, or lithiumfluoride. In the case of this embodiment, it is impossible to perfectly prevent the phenomenon in which the reflected light beam goes back, but it is possible to satisfactorily improve the detection accuracy of the optical fiber gyro of phase modulation type.

Moreover, instead of the nonreflective coating, a liquid such as the matching oil having a refractive index almost the same as that of the optical fiber as used may be coated. The effect of the embodiment which is designed in such a manner is the same as that of the embodiment employing the above nonreflective coating.

Further, for the provision of the antireflection means, any combination of the slanting and polishing, the cutting at an angle, the application of the nonreflective coating or the matching oil and the inclined arrangement of the parts, may be used. In this embodiment as well, it is possible to improve the detection accuracy of the optical fiber gyro of phase modulation type.

Incidentally, the light-beam receiving surface of the photo diode 22 shown in Fig. 1 and the end face of the rod lens 23a shown in Fig. 2, may be covered with the nonreflective coating. In this case, it is possible to prevent the unexpected generation of the reflected light beam, and increase the effect of preventing the reflected light beam.

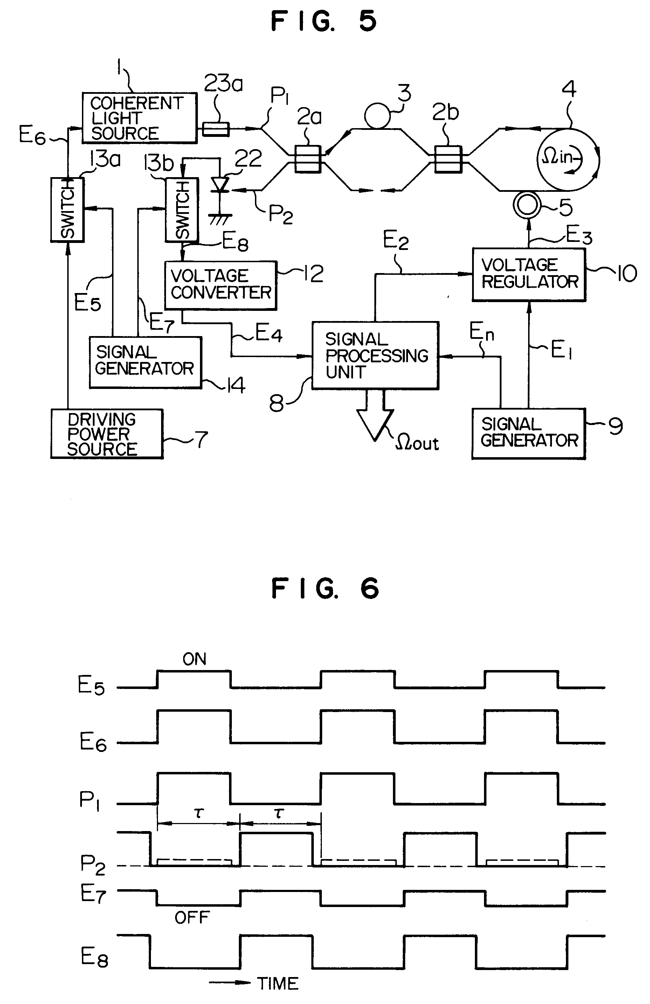

Next, another embodiment of the present invention will be described with reference to Fig. 5. In the embodiment of Fig. 5, the same reference numerals as those in Fig. 1 designate the same or like elements. Incidentally, any end face of the optical fiber has no antireflection means. Then, the photo diode 22 is the same as that shown in Fig. 11 and operates as a photodetector for converting the signal light beam into a current. A current to voltage converter 12 serves to convert the output current of the photo diode 22 into a voltage E4. Incidentally, the portion including the photo diode 22 and the current to voltage converter 12 corresponds to the photoelectric conversion unit 6 of Fig. 1.

In Fig. 5, first, each of switches 13a and 13b is constructed by an analog switch, for example, which is opened or closed according to the command voltage from the signal generator 14. A signal generator 14 is made up of an oscillator and a divider and serves to output two kinds of pulse signals E5 and E7. The switch 13a turns on and off a driving current E6 for the coherent light source alternately at a period of time determined by the length of the optical fiber loop 4 such that the period of ON time is slightly shorter than that of OFF time. The switch 13b turns on and off an output current E8 from the photo diode 22 alternately in synchronism with the interruption of the switch 13a. Moreover, the reference symbol P1 designates an optical output and the reference symbol P2 designates the signal light beam.

Next, the explanation will be made of the operation of the embodiment of Fig. 5 with reference to Fig. 6.

In Fig. 6, the reference symbols of the respective waveforms correspond to the reference symbols shown in Fig. 5. Incidentally, for the purpose of simplicity of the description, each waveform is illustrated in the form of square wave by placing the weight in timing.

First, $\tau$ is, as described above, the time required for the light beam to circulate the optical fiber loop 4. Next, in the waveforms of the signal light beam P2, the waveform represented by a solid line is the original signal light beam of the optical fiber gyro of phase modulation type which is not affected by the reflected light beam of the signal light beam, and represents a valid component. On the other hand, the waveform represented by a broken line represents the noise component of the signal which is generated in such a way that the reflected light beam of the signal light beam is re-entered into the optical fiber loop 4 shown in Fig. 5, modulated by the phase modulator 5 and returned as signal light beam.

The phase relationship between each of the light beam input P1 and the valid component of the signal light beam P2 and the noise component of the signal light beam P2 is as shown in the figure. That is, the valid component of P2 is delayed by a time delay $\tau$ from the light beam input P1, and the noise component is delayed by a time delay $2\tau$ from the light beam input P1. These phase delays depend on the total length of the optical fiber of the optical fiber loop 4 (assuming that the length of the optical fiber of the other portions is substantially zero) and is very stable.

The pulse voltages E5 and E7 are turned on or off with the same period $2\tau$. However, since the ON time period of the pulse voltage E5 is slightly shorter than the OFF time period thereof, while the ON time period of the pulse voltage E7 is equal to the OFF time period thereof, the ON time period of the pulse voltage E5 and the OFF time period of the pulse voltage E7 are out of phase as shown in the figure. By arranging such a manner, the noise component in the output current of the photo diode 2 is removed and only the valid component is selected.

Incidentally, the frequency of the input light beam is about 300 THz, the phase modulation frequency of the phase modulator 5 is about 20 KHz, and the interruption frequency of the pulse voltage E5 depends on the length of the optical fiber loop, and is usually several hundreds KHz.

Then, as shown in Fig. 5, by selecting only the valid component of the output current E8 and applying it to the current to voltage converter 12, it is possible to remove the noise component which could otherwise exist in the AC output E4 due to the reflected light beam, and substantially the same effect as that of the above-mentioned antireflection means is obtained. By processing the AC output E4 by the signal processing unit 8, it is possible to detect the input angular velocity $\Omega_{in}$ and output the detection value $\Omega_{out}$ with high accuracy.

Therefore, according to the present embodiment, by only adding the switches and the driving circuit therefore to the prior art system, it is possible to sufficiently improve the detection accuracy of the optical fiber gyro of phase modulation type.

Moreover, according to the present embodiment, the single-mode laser diode having a Fabry-Pérot resonator, or the multimode laser diode employed in the compact disc or the like, which is difficult to be provided with the antireflection means, can be used for the coherent light source 1. Thus, this embodiment is effective to make the system inexpensive.

Next, the description will be made of a modification of the embodiment shown in Fig. 5.

First, the modification is designed in such a way that the phase relationship between the pulse voltage E5 and the pulse voltage E7 is inversed and only the noise component of an output current E8 is selected. Then, the oscillator 14 is normally stopped by the command from the signal processing unit 8 for example, so that the pulse voltages E5 and E7 are replaced by the DC signals, and the switches 13a and 13b keep the ON state.

Then, the system of this embodiment normally operates in the same manner as that of the prior art system so that, the error due to the reflected light beam is included in the detection value $\Omega_{out}$.

Next, the switches 13a and 13b are operated temporarily in a manner similar to that as shown in Fig. 6, so that only the noise component of the output current E8 is, as described above, selected and applied to the current to voltage converter 12. The AC voltage E4 is processed in the signal processing unit 8, to classify the noise component into frequency components, which are stored in the microcomputer or the like. The detection value normally obtained is corrected on the basis of the stored values thereby to output the correct detection value $\Omega_{out}$.

According to the present embodiment, since the switches 13a and 13b normally keep their ON state it is effective to make the utilization factor of the signal light beam P2 2 times as large as that of the embodiment shown in Fig. 5.

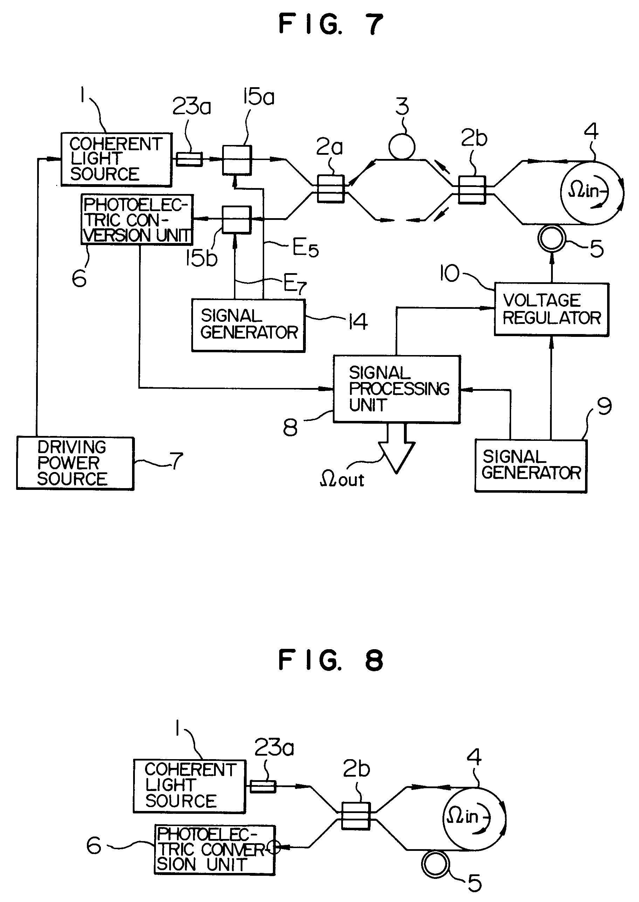

Next, a further embodiment of the present invention will be described with reference to Fig. 7.

The embodiment of Fig. 7 is arranged in such a way that instead of the electric switches 13a and 13b in the embodiment of Fig. 5, optical switches 15a and 15b are provided in the respective positions illustrated in the figure.

Each of those optical switches 15a and 15b is, for example, an optical shutter in which a pair of polarizers are arranged along the optical axis, and the planes of polarization of both the polarizers are at an angle which is variable.

The operational timing of the present embodiment is the same as that of the embodiment of Fig. 5, as shown in Fig. 6. Moreover, the present invention achieves the same effect as that of the embodiment shown in Fig. 5.

Now, although the signal generator 14 is arranged as the independent part in the embodiments of Fig. 5 and Fig. 7, the present invention is not limited thereto. That is, for example, the signal generator employing the microcomputer in the signal processing unit 8 may be available. Even in this case, the same effect can be achieved.

Moreover, although the detection value $\Omega_{out}$ as the output of the signal processing unit 8 is obtained as the detection value of the input angular velocity $\Omega_{in}$ in the above embodiments, the present invention is not limited thereto. That is, the system may also be arranged in such a way that the integrated value of the input angular velocity $\Omega_{in}$, i.e., an angle $\theta_{out}$ is outputted. Incidentally, there are many cases in which it is required to output both the angular velocity $\Omega_{out}$ and the angle $\theta_{out}$. The above embodiments can be adapted to such cases.

Moreover, although the description has been given to the specific embodiments in which the synchronous detector is included in the signal processing unit 8, the present invention is not limited thereto. That is, instead thereof, it may be replaced, for example, by a high speed A/D converter and a frequency analyzer performing the numerical calculation. Even in this case, the effect of the embodiment does not change.

The optical fiber gyro of phase modulation type to which the means for preventing an influence of a reflected light beam according to the present invention is applied is not limited to the arrangement of Fig. 1 without the antireflection means. For example, the arrangements as shown in Fig. 8 and Fig. 9 may be available.

First, in Fig. 8, the light beam branch element 2a and the polarizer 3 included in the prior art system are omitted. The system of Fig. 9 is arranged in such a way that the light beam branch element 2b shown in Fig. 8 is replaced by a different part. Incidentally, in those figures, the light beam branch element 2c is a beam splitter having a little polarization effect, the rod lens 23b is a collimating lens for making the diverged light beams from the coherent light source 1 into the parallel light beams, and each of the rod lenses 23c and 23d serves to collect the parallel light beams emitted from the light beam branch element 2c and project them into the optical fiber.

Then, when the present invention is applied to the optical systems shown in Fig. 8 and Fig. 9, the effect of the embodiment does not change.

As set forth hereinabove, according to the present invention, by only adding the parts of simple construction to the prior art system, it is possible to remove the influence of the reflected light beam, and also it is possible to provide a small-sized and highly precise optical fiber gyro of phase modulation type with ease and securely.

**Claims**

1. An optical fiber gyro of phase modulation type for detecting a quantity relating to a rotational angular velocity of a movable object, comprising:

    a light source (1) for emitting a coherent light beam;

    an optical path of an optical fiber including an input portion (201) having an input end (A) to which the coherent light beam emitted from said light source (1) is applied, a light beam branch element (2a) connected to said input portion (201) for receiving and splitting the input coherent light beam into two coherent light beams, a sensing portion (202) having an optical branch path including a phase modulator (5) and an optical fiber loop (4) movable for rotation together with rotation of said movable object and arranged to propagate the two coherent light beams through said optical branch path in directions opposite to each other and again compose both the two coherent light beams to produce one composite coherent light beam, and an output portion (203) optically connected to said sensing portion (202) and having an output end B for outputting the composite coherent light beam;

    processing means (8) for processing the composite coherent light beam outputted from said output end (B) to produce a detection signal relating to the rotational angular velocity of said movable object; and

    means for preventing an influence of a reflected light beam of the coherent light beam generated in said optical path of an optical fiber on the detection signal.

2. An optical fiber gyro according to Claim 1, wherein said means for preventing an influence of a reflected light beam includes antireflection means which is provided at least in said output end (B) of said output portion (203) of said optical path to prevent the coherent light beam from being reflected by a face of said output end (B).

3. An optical fiber gyro according to Claim 2, wherein said antireflection means is constructed by shifting an angle between the face of said output end (B) and an axis of propagation of the coherent light beam in said output end (B) from a right angle by a predetermined angle.

4. An optical fiber gyro according to Claim 3, wherein the predetermined angle is larger than about 60 % of the maximum incidence half angle of said end face (B) and not larger than an angle of the total reflection.

5. An optical fiber gyro according to Claim 2, wherein said antireflection means includes a coating of an antireflection material which is applied to the face of said output end (B).

6. An optical fiber gyro according to Claim 2, wherein said antireflection means includes a liquid having the same refractive index as that of the optical fiber which is applied to the face of said output end (B).

7. An optical fiber gyro according to Claim 2, wherein said antireflection means is constructed by shifting an angle between the face of said output end (B) and an axis of propagation of the coherent light beam in said output portion (203) from a right angle by a predetermined angle, and by applying an antireflection material to the face of said output end (B).

8. An optical fiber gyro according to Claim 1, wherein said means for preventing an influence of a reflected light beam is antireflection means which is provided at least on a face of said output end (B) of said output portion (203) of said optical path, a face of said input end (A) of said input portion (201), and a face of said coherent light source (1) confronting with said input end (A) to prevent the coherent light beam from being reflected from each of said end faces.

9. An optical fiber gyro according to Claim 8, wherein said antireflection means is constructed by shifting an angle between each of said end faces and an axis of propagation of the coherent light beam passing through each of said end faces from a right angle by a predetermined angle.

10. An optical fiber gyro according to Claim 9, wherein the predetermined angle is larger than about 60 % of the maximum incidence half angle of said end face (B) and not larger than an angle of the total reflection.

13

**11.** An optical fiber gyro according to Claim 8, wherein said antireflection means includes a coating of an antireflection material which is applied to each of said and faces.

**12.** An optical fiber gyro according to Claim 8, wherein said antireflection means includes a liquid (50) having the same refractive index as that of the optical fiber which is applied to each of said end faces.

**13.** An optical fiber gyro according to Claim 8, wherein said antireflection means is constructed by shifting an angle between each of said end faces and an axis of propagation of the coherent light beam passing through each of said end faces from a right angle by a predetermined angle, and by applying an antireflection material to each of said end faces.

**14.** An optical fiber gyro according to Claim 1, wherein said means for preventing an influence of a reflected light beam includes first means operating for turning on and off the coherent light beam generated by said coherent light source (1) alternately at a frequency determined by the length of said optical fiber loop (4), and second means provided between said output portion (203) of said optical path and said processing means (8) for turning on and off an output generated from said output portion (203) alternately in synchronism with an operation of said first means.

**15.** An optical fiber gyro according to Claim 14, wherein during a period of time when the coherent light beam is turned on by said first means, the output of said output portion (203) is turned off by said second means, thereby to remove a noise component relating to the reflected light beam of the coherent light beam generated in said optical path and included in the output of said output portion.

**16.** An optical fiber gyro according to Claim 14, further comprising means for selectively operating said first and second means, and wherein during a period of time when the coherent light beam is turned on by said first means, the output of said output portion (203) is turned on by said second means, thereby to selectively apply a noise component relating to the reflected light beam of the coherent light beam generated in said optical path and included in the output of said output portion to said processing means (8) when said first and second means are operated, and said processing means (8) includes means for producing a signal representing the noise component given through said second means, and means for correcting the detection signal, which is obtained when said first and second means are not operated, by the signal representing the noise component.

**17.** An optical fiber gyro according to Claim 14, wherein said first means includes optical means (15a) for turning on and off the coherent light beam generated by said coherent light source (1) alternately.

**18.** An optical fiber gyro according to Claim 17, wherein said optical means (15a) includes an optical shutter employing a pair of polarizers.

**19.** An optical fiber gyro according to Claim 14, wherein said first means includes electric means (13a) for turning on and off driving current for driving said coherent light source (1) alternately.

**20.** An optical fiber gyro according to Claim 14, wherein said second means includes optical means (15b) for turning on and off the coherent light beam generated by said output portion (203) alternately.

**21.** An optical fiber gyro according to Claim 20, wherein said optical means (15b) includes an optical shutter employing a pair of polarizers.

**22.** An optical fiber gyro according to Claim 14, further comprising means provided between said output portion (203) and said processing means (8) for converting the coherent light beam generated by said output portion (203) into an electric signal, and wherein said second means includes means (13b) for turning on and off the electric signal ON or OFF.

**23.** An optical fiber gyro according to Claim 14, wherein the intermittence period of said first means is approximately 2 times as large as the time required for the coherent light beam to circulate said optical fiber loop (4).

**24.** An optical fiber gyro according to Claim 1, wherein said means for preventing an influence of a

14

reflected light beam includes antireflection means provided at least on said output end (B) of said output portion (203) of said optical path and an end face of said coherent light source (1) confronting with said input end (A) to prevent the reflected light beam from being reflected by a face of said output end (B) and said end face of said coherent light source (1).

25. An optical fiber gyro according to Claim 24, wherein said antireflection means provided on said end face of said coherent light source (1) is arranged by making an angle between said output face of said coherent light beam (1) and an optical axis of the coherent light beam passing through said end face larger than a predetermined angle.

# FIG. 1

# FIG. 2

SIGNAL
LIGHT BEAM

REFLECTED
LIGHT BEAM III

I

20c

23a

REFLECTED
LIGHT BEAM I

REFLECTED
LIGHT BEAM II

A'

21c

# FIG. 3

REFLECTED
LIGHT BEAM

20d

SIGNAL
LIGHT
BEAM

D(C)

21d

# FIG. 4

SIGNAL
LIGHT
BEAM

REFLECTED
LIGHT BEAM III

I

20c

θ

REFLECTED
LIGHT BEAM I

REFLECTED
LIGHT BEAM II

23a

A

21c

17

# FIG. 5

# FIG. 6

# F I G. 7

# F I G. 8

# F I G. 9

# F I G. 10

$\gamma$ = RE-INTRODUCED LIGHT BEAM INTENSITY / ORIGINAL LIGHT BEAM INTENSITY (%)

k = SLANTED ANGLE $\theta$ / MAXIMUM INCIDENCE HALF ANGLE VALUE $\theta_f$ (%)

# FIG. II PRIOR ART

SIGNAL
LIGHT
BEAM

REFLECTED
LIGHT BEAM

# FIG. 12

$(E_3)$ $E_{ACin}$

$E_{ACout}(E_4)$

30

OUT

X

Y

31

$E_{DC}$

32a
DELAY

33a
ATTENUATOR

32b

33b

EP 0 509 511 A2

## F I G. 13

d (SECOND ORDER, PRESENCE)
b (FIRST ORDER, PRESENCE)
c (SECOND ORDER, ABSENCE)
a (FIRST ORDER, ABSENCE)
e (FOURTH ORDER, ABSENCE)
f (FOURTH ORDER, PRESENCE)

$An$

0.6
0.5
0.4
0.3
0.2
0.1
0
-0.1
-0.2
-0.3
-0.4
-0.5
-0.6

-6.28    -3.14    8    3.14    6.28

$\longrightarrow K_s \Omega_{in}$

## F I G. 14

$\dfrac{f}{d}$ (IN CASE OF PRESENCE OF REFLECTION)

$\dfrac{e}{c}$ (IN CASE OF ABSENCE OF REFLECTION)

$\dfrac{A_4}{A_2}$

O

O    $\longrightarrow K_s \Omega_{in}$

22